# EUROPÄISCHE PATENTANMELDUNG

(11) **EP 0 789 335 A2**
(43) Veröffentlichungstag der Anmeldung: **13.08.1997**
(21) Anmeldenummer: 96119941.1
(22) Anmeldetag: 12.12.1996
(51) Int. Cl.: G07F 7/10, G07F 19/00

(54) **Verfahren zum Abrechnen elektronischer Geldbörsensysteme mit Chipkarten**

(30) Priorität: 07.02.1996 DE 19604349
(71) Anmelder: Deutsche Telekom AG, 53113 Bonn (DE)
(72) Erfinder: Normann, Ute, Dipl.-Ing., 64807 Dieburg (DE); Korst, Uwe, Dipl.-Ing., 64625 Bensheim (DE); Trabold, Johann, Dipl.-Ing., 64673 Zwingenberg (DE); Schaefer-Lorinser, Frank, Dr.rer.nat., 64372 Ober-Ramstadt (DE)

(57) **Zusammenfassung**

Das Verfahren zum Prüfen einer Speicherchipkarte ist durch die folgenden Schritte charakterisiert: Bei einer ersten Echtheitsprüfung mittels kryptografischer Funktionen, die im Bereich (4) gespeichert sind, werden Zwischenergebnisse der Prüfung in gesicherten Speicherbereichen (5) gespeichert, die danach in die Berechnung einer Folgeauthentifikation eingehen. Der Bereich 6 ist als Zähler ausgebildet und zählt die Anzahl der fehlerhaften Authentifikationen. Nach einer festgelegten Anzahl von fehlerhaften Versuchen wird die Karte dadurch automatisch ungültig gemacht. Die Speicherchipkarte mit internen kryptografischen Funktionen ist zum Prüfen auf Echtheit mittels eines Terminals ausgerüstet. Im Speicherbereich sind ein Identifikationsbereich (1), ein vertraulicher Bereich (2), ein Zählerbereich (3), ein Bereich (4) für kryptografische Funktion(en), ein Bereich (5) für das Zwischenergebnis der Authentifikationsprüfung und ein Bereich (6) für den Zähler für fehlerhafte Authentifikationen angeordnet.

## Beschreibung

Die Erfindung betrifft ein Verfahren zum Abrechnen elektronischer Geldbörsensysteme mit Speicherchipkarten.

Konzepte für das Betreiben von elektronischen Geldbörsen auf Chipkarten befinden sich bereits seit einigen Jahren in der Entwicklung. Sie beinhalten neben der Technik der Chipkarte in den meisten Fällen auch die Sicherheitstechnik für das Zusammenwirken von Chipkarte und Rechner- und Übertragungssystemen sowie die Abrechnung der mit der Chipkarte vorgenommenen Transaktionen. Sowohl national als auch international wurden bereits zahlreiche Konzepte vorgestellt. In einigen Ländern sind bereits elektronische Geldbörsensysteme in Feldversuchen oder gar im Wirkbetrieb eingesetzt, wie zum Beispiel
- Feldversuch Eisenstadt, Österreich seit Dezember 1994
- Avant-Card in Finnland
- Danmont Konzept in Dänemark
- Mondex, in Swindon, England
- Darüberhinaus wird unter CEN TC224 WG10 eine "Intersektor electronic purse" (branchenübergreifende elektronische Geldbörse) standardisiert.

Die Abrechnung erfolgt in den bekannten Systemen nach dem folgenden Verfahren: Der erste Schritt ist das Laden von geldwerten Einheiten in die Chipkarte, wobei der Gegenwert, den der Karteninhaber in bar oder auch bargeldlos bezahlen muß, auf einem sogenannten "Poolkonto" des Börsenbetreibers hinterlegt wird. Bezahlt ein Karteninhaber anschließend mit seiner Chipkarte, werden geldwerte Einheiten aus der elektronischen Geldbörse herausgebucht und mit Hilfe eines Sicherheitsmodules zum Terminal des Serviceanbieters übertragen. Dort werden die eingenommenen geldwerten Einheiten entweder zu einem Betrag akkumuliert und mit dem Börsenbetreiber abgerechnet oder aber jeder einzelne Bezahlvorgang wird beim Börsenbetreiber zur Abrechnung eingereicht. Akkumulierte Beträge oder Einzeldatensätze werden entweder auf einer sogenannten Händlerkarte gesammelt, die der Serviceanbieter einreichen muß oder mit einem entsprechend ausgerüsteten Terminal on-line an eine Abrechnungsstelle übertragen. Außerdem sind ähnliche Systeme und Verfahren durch die US-A-4,859,837, WO-A-90 15 382 und die deutsche Patentanmeldung P 42 43 851.9 bekanntgeworden.

Eine Chipkarte für Bezahlvorgänge enthält neben verschiedenen Datenbereichen wie zum Beispiel für Seriennummern auch als Zähler ausgebildete bzw. verwendete Speicherbereiche.

Die Speicherchipkarten werden auf Authentizität durch Anwendung bekannter Challenge-Response Verfahren geprüft, wie in Absatz 4.1.2.1, ab Seite 61 des Buches "Chipkarten als Werkzeug" von Beutelsberger, Kersten und Pfau beschrieben. Hierzu werden die Daten des Speicherchips ausgelesen. Mit diesen Chipdaten ist es mit einem Terminal bzw. Kartenleser möglich, die Karte zu identifizieren und auf Plausibilität zu prüfen. In einem im Terminal eingebauten Sicherheitsmodul wird eine Authentifikation durchgeführt. Hierzu erhält das Sicherheitsmodul die Chipdaten und errechnet hierzu aufgrund eines Systemschlüssels einen in der Speicherchipkarte befindlichen individuellen Kartenschlüssel.

Bei den derzeitig eingesetzten Chipkarten wird die Echtheit der Chipkarten geprüft. Die Überprüfung der Echtheit schließt Speicherbereiche ein, die für die Identifikation, für die Authentifikation sowie für eine Zählfunktion benötigt werden. Diese Echtheitsprüfung erfolgt mittels bekannter kryptografischer Funktionen in einem Sicherheitsmodul. Im Rahmen der Echtheitsprüfung erhält das Sicherheitsmodul die Speicherbereiche. Bestandteil dieses Speicherbereiches ist ein Zählerstand. Die Dekrementierung des Zählerbereiches erfolgt durch ein Terminal. Danach hat das Sicherheitsmodul die Möglichkeit erneut die Echtheit der Chipkarte zu überprüfen.

Da zwischen den Authentifikationen die Kontrolle, ob die gleiche Karte immer noch im Endgerät vorhanden ist, vom Terminal erfolgt und dem Sicherheitsmodul nicht bekannt ist, ist es einem Sicherheitsmodul nicht möglich, eine eindeutige Differenz zwischen dem bekannten Zählerstandes in der Chipkarte aufgrund einer ersten Authentifikation sowie eines Zählerstandes aufgrund einer folgenden Authentifikation zu ermitteln.

Der Erfindung liegt die Aufgabe zugrunde, ein Verfahren zum Prüfen von Speicherchipkarten zu schaffen, das eine zwei- oder mehrfache Authentifikation mit Hilfe kryptografischer Funktionen und eines Terminals ermöglicht. Der Erfindung liegt außerdem die Aufgabe zugrunde, eine Speicherchipkarte zu schaffen, die zur Realisierung des Verfahrens geeignet ist.

Die erfindungsgemäße Lösung für das Verfahren besteht insbesondere im Kennzeichen des Patentanspruchs 1 bzw. in der Lösung gemäß Kennzeichen des Patentanspruchs 2.

Die Lösungen für die Speicherchipkarte sind in den Kennzeichen der Patentansprüche 3 und 5 angegeben. Eine weitere Ausgestaltung ist im Kennzeichen des Patentanspruchs 4 angegeben.

Nur mit Hilfe dieses Verfahrens und der erfindungsgemäßen Speicherchipkarte mit zusätzlichen Speicherbereichen ist es möglich, in dem Sicherheitsmodul die Differenz zwischen dem Zählerstand zum Zeitpunkt der ersten Authentifikation mit dem Zählerstand zum Zeitpunkt der zweiten Authentifikation zu ermitteln.

Das Verfahren der erfindungsgemäßen Lösung und der Aufbau der Speicherbereiche der erfindungsgemäßen Speicherchipkarte sollen im folgenden anhand eines Ausführungsbeispiels erläutert werden.

In der Zeichnung bedeuten:

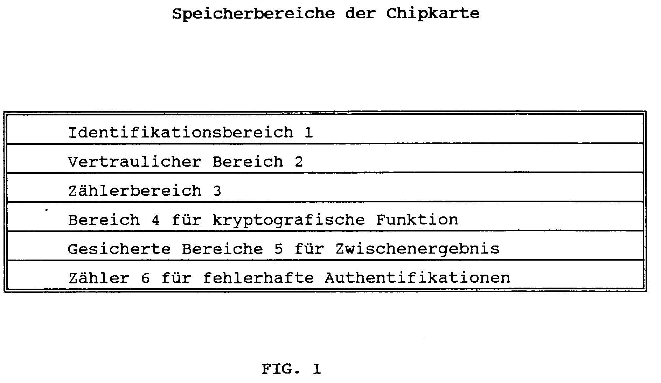

- Fig. 1: Aufbau einer Speicherchipkarte

Die in Fig. 1 dargestellte Speicherchipkarte, bzw. deren Speicherstruktur hat einen Identifikationsbereich 1, einen vertraulichen Bereich 2, einen Zählerbereich 3, einen Bereich 4 für kryptografische Funktion(en), einen Bereich 5 für das Zwischenergebnis der Authentifikationsprüfung und einen Zähler 6 für fehlerhafte Authentifikationen. Die Reihenfolge der Bereiche ist optional. Die Speicherchipkarte mit internen kryptografischen Funktionen zur Echtheitsprüfung der Speicherchipkarte mit Terminals, die außerdem mit Speicherbereichen 1 zur eindeutigen Identifizierung der Chipkarte sowie mit einem Speicherbereich, der als Zähler ausgeprägt ist und durch das Terminal dekrementiert werden kann, ist so strukturiert und aufgebaut, daß ein gesicherter Speicherbereich 5 für die Speicherung von Ergebnissen aufgrund einer Authentifikation vorhanden ist.

Um im Sicherheitsmodul zweifelsfrei feststellen zu können, ob die Speicherchipkarte, die bei einer ersten Authentifikation auf Echtheit geprüft wurde, auch mit der Speicherchipkarte identisch ist, die bei einer weiteren Authentifikation auf Echtheit geprüft wurde, ist es erforderlich, daß ein Merkmal einer ersten Überprüfung in die Echtheitsprüfung im Rahmen einer folgenden Authentifikation eingeht. Nur damit kann für das Sicherheitsmodul zweifelsfrei festgestellt werden, daß die Authentifikationen mit einer identischen Karte durchgeführt wurden. Dies erfolgt dadurch, daß in der Speicherchipkarte ein weiterer Speicherbereich 5 eingerichtet wird, der die erforderliche Information für die Folgeauthentifikation zwischenspeichert.

Das Verfahren zum Prüfen einer Speicherchipkarte mit internen kryptografischen Funktionen 4 auf Echtheit mittels eines Terminals, wobei die Speicherkarte außerdem Speicherbereiche zur eindeutigen Identifizierung der Chipkarte, sowie einen Speicherbereich, der als Zähler ausgebildet ist, enthält, der durch das Terminal dekrementiert werden kann, ist durch die folgenden Schritte charakterisiert:

Bei einer ersten Echtheitsprüfung mittels kryptografischer Funktionen, die in Speicherbereichen 4 gespeichert sind, werden Zwischenergebnisse der Prüfung in gesicherten Speicherbereichen 5 gespeichert, die danach in die Berechnung einer Folgeauthentifikation eingehen.

Der Bereich 6 ist als Zähler ausgebildet und zählt die Anzahl der fehlerhaften Authentifikationen. Nach einer festgelegten Anzahl von fehlerhaften Versuchen wird die Karte dadurch automatisch ungültig gemacht.

Das zur Prüfung der Echtheit eingesetzte Sicherheitsmodul ist in der Lage das in der Chipkarte zwischengespeicherte Zwischenergebnis zu berechnen. Bei einer Folge-Echtheitsprüfung geht dieses Zwischenergebnis sowohl bei der Chipkarte als auch bei dem Sicherheitsmodul in das Ergebnis der Echtheitsprüfung mit ein. Erst bei überprüfter Echtheit durch das Sicherheitsmodul ist nachgewiesen, daß bei zwei nachfolgenden Echtheitsprüfungen eine identische Chipkarte eingesetzt wurde.

## Patentansprüche

1. Verfahren zum Prüfen einer Speicherchipkarte mit internen kryptografischen Funktionen (4) auf Echtheit, mittels eines Terminals, wobei die Speicherkarte außerdem Speicherbereiche zur eindeutigen Identifizierung der Chipkarte, sowie einen Speicherbereich, der als Zähler ausgebildet ist, enthält, der durch das Terminal bzw. einen Kartenleser dekrementiert werden kann, dadurch gekennzeichnet,
daß bei einer ersten Echtheitsprüfung der Chipkarte mittels einer kryptografischen Funktion (4) in gesicherten Speicherbereichen (5) Zwischenergebnisse der Echtheitsprüfung gespeichert werden, die in die Berechnung einer Folgeauthentifikation mit eingehen.

2. Verfahren nach Patentanspruch 1, dadurch gekennzeichnet,
daß ein Speicherbereich als Zähler (6) für die maximal festgelegte Anzahl fehlerhafter Authentifikationen ausgebildet ist, der nach der maximalen Anzahl von fehlerhaften Versuchen die Karte ungültig macht.

3. Speicherchipkarte mit internen kryptografischen Funktionen zur Echtheitsprüfung der Speicherchipkarte mittels eines Terminals bzw. eines Kartenlesers, die außerdem mit Speicherbereichen (1) zur eindeutigen Identifizierung der Chipkarte sowie mit einem Speicherbereich, der als Zähler ausgeprägt ist und durch das Terminal bzw. den Kartenleser dekrementiert werden kann, ausgestattet ist, dadurch gekennzeichnet,
daß ein gesicherter Speicherbereich (5) für die Speicherung von Ergebnissen aufgrund einer Authentifikation vorhanden ist.

4. Speicherchipkarte nach Patentanspruch 3, dadurch gekennzeichnet,
daß als Speicherzellen (5) für die gesicherten Speicherbereiche Halbleiterspeicher (RAM) eingesetzt werden, die den Inhalt nach Spannungsverlust verlieren.

5. Speicherchipkarte zur Durchführung des Verfahrens nach Patentanspruch 1 oder 2, dadurch gekennzeichnet,
daß im Speicherbereich ein Identifikationsbereich (1), ein vertraulicher Bereich (2), ein Zählerbereich (3), ein Bereich (4) für kryptografische Funktion(en), ein Bereich (5) für das Zwischenergebnis der Authentifikationsprüfung und optional ein Bereich (6) für den Zähler für fehlerhafte Authentifikationen angeordnet sind.
